# EUROPÄISCHE PATENTSCHRIFT

(11) **EP 1 834 385 B1**
(45) Veröffentlichungstag und Bekanntmachung des Hinweises auf die Patenterteilung: **04.02.2009**
(21) Anmeldenummer: 05815698.5
(22) Anmeldetag: 07.11.2005
(51) Int. Cl.: H01R 39/39

(54) **BÜRSTENHALTER FÜR EINE ELEKTRISCHE MASCHINE**
BRUSH HOLDER FOR AN ELECTRICAL MACHINE
PORTE-BALAIS POUR MACHINE ELECTRIQUE

(30) Priorität: 30.12.2004 DE 102004063809
(43) Veröffentlichungstag der Anmeldung: 19.09.2007
(73) Patentinhaber: ROBERT BOSCH GMBH, 70442 Stuttgart (DE)
(72) Erfinder: RUPP, Bernhard, 75056 Sulzfeld (DE)
(86) Internationale Anmeldenummer: PCT/EP2005/055776
(87) Internationale Veröffentlichungsnummer: WO 2006/072491

(56) Entgegenhaltungen:
- EP-A- 0 645 854
- DE-U- 1 921 095
- US-A- 4 155 023
- US-A- 4 746 829
- US-A- 4 758 757

## Beschreibung

### Stand der Technik

Die vorliegende Erfindung betrifft einen Bürstenhalter für eine elektrische Maschine sowie eine elektrische Maschine mit einem derartigen Bürstenhalter.

Ein Bürstenhalter gemäß dem Oberbegriff des Anspruchs 1 ist aus US-A-4 155 023 bekannt.

Bürstenhalter für elektrische Maschinen sind aus dem Stand der Technik in unterschiedlichen Ausgestaltungen bekannt. Die Bürstenhalter haben dabei die Funktion, Kohlebürsten für eine elektrische Kontaktierung zwischen einem feststehenden und einem rotierenden Teil zu halten. Während des Betriebes der elektrischen Maschine treten dabei Bürstenschwingungen auf. Derartige Schwingungen der Bürsten werden insbesondere durch Reibwertschwankungen angeregt. Über den Bürstenhalter können diese Schwingungen in andere Bauteile der elektrischen Maschine eingeleitet werden und an die Umgebung abgestrahlt werden. Dies kann zu einem sogenannten Bürstengeräusch während des Betriebes führen. Insbesondere bei Anwendungen von elektrischen Maschinen beispielsweise als Komfortantriebe in Fahrzeugen für Fensterheber, elektrische Schieberdächer, Fahrzeugsitze usw., sind derartige Geräusche während des Betriebes unerwünscht, da sie von Fahrzeuginsassen als störend empfunden werden bzw. als Defekt des Antriebes interpretiert werden.

Bei Bürstenträgern, welche einen Ausgleich eines Verschleißes der Bürste über einen Federhebel durchführen, sind die im Betrieb entstehenden Schwingungen besonders groß, da sie infolge des Federhebels verstärkt auf die angrenzenden Bauteile der elektrischen Maschine übertragen werden. Von daher sind Maßnahmen notwendig, um die Bürstenschwingungen zu minimieren. Hierzu schlägt die US-A-4 155 023 Dämpfungselemente an dem Federhebelelement des Bürstenhalters vor.

### Vorteile der Erfindung

Der erfindungsgemäße Bürstenhalter für eine elektrische Maschine mit den Merkmalen des Patentanspruchs 1 weist demgegenüber den Vorteil auf, dass er an einer Bürste auftretende Schwingungen sehr gut dämpfen kann. Dabei ist der erfindungsgemäße Bürstenhalter sehr einfach aufgebaut und kann kostengünstig hergestellt werden. Dies ist insbesondere vorteilhaft, da es sich bei derartigen Bürstenhaltern um Massenbauteile handelt und große Kosteneinsparpotentiale erreicht werden. Die Dämpfung von Schwingungen der Bürste wird erfindungsgemäß durch eine Litze erreicht, welche für eine Stromversorgung zur Bürste vorgesehen ist. Die Litze berührt dabei an wenigstens einer Kontaktstelle das Federhebelelement des Bürstenhalters, wobei zwischen der Kontaktstelle und der Bürste ein Litzenabschnitt mit einer vorbestimmten Länge angeordnet ist. Somit wird erfindungsgemäß die Litze als Dämpfungselement für Schwingungen an der Bürste verwendet. Erfindungsgemäß kann somit ein Dämpfungseffekt ohne zusätzliches Dämpfungselement erreicht werden, da die Litze ohnehin für die Stromzufuhr zur Bürsten vorhanden ist.

Die Unteransprüche zeigen bevorzugte Weiterbildungen der Erfindung.

Vorzugsweise ist die Litze aus einer Vielzahl von einzelnen, drahtartigen Elementen gebildet, welche in einem gewissen Umfang relativ zueinander bewegbar sind. Dadurch kann eine verbesserte Dämpfungseigenschaft der Litze erreicht werden, da sich die einzelnen drahtartigen Elemente relativ zueinander bewegen können und eine Dämpfung von auftretenden Schwingungen ausführen können.

Gemäß einem besonders bevorzugten Ausführungsbeispiel der vorliegenden Erfindung ist die Litze aus einem Drahtgeflecht, insbesondere einem Kupferdrahtgeflecht, hergestellt. Hierdurch lassen sich noch bessere Dämpfungseigenschaften erreichen, da Relativbewegungen der einzelnen Drähte in Längsrichtung der Drähte und quer hierzu möglich sind.

Die Litze ist vorzugsweise an der Kontaktstelle zum Federhebelelement mittels Schweißen, Löten oder Kleben befestigt.

Gemäß einer anderen bevorzugten Ausgestaltung der vorliegenden Erfindung ist das Federhebelelement mit einer Durchgangsöffnung gebildet, wobei die Litze durch die Durchgangsöffnung hindurchgeführt ist. Der Durchmesser der Durchgangsöffnung ist dabei nur etwas größer als ein Durchmesser der Litze, so dass sichergestellt ist, dass die Litze das Federhebelelement kontaktiert. Besonders bevorzugt sind zwei oder mehrere Durchgangsöffnungen im Federhebelelement ausgebildet und die Litze ist durch jede der Durchgangsöffnungen im Federhebelelement hindurchgeführt. Dadurch wird erreicht, dass die Litze auch noch zwischen zwei Durchgangsöffnungen im Federhebelelement am Federhebelelement entlanggeführt werden kann, so dass sich hierdurch zusätzliche Kontaktstellen ergeben und Schwingungen noch besser gedämpft werden können.

Gemäß einer weiteren bevorzugten Ausgestaltung der vorliegenden Erfindung weist das Federhebelelement zwei vorstehende Wandbereiche auf, wobei die Litze zwischen den beiden Wandbereichen hindurchgeführt ist. Dadurch entsteht am Federhebelelement ein kanalartiger Aufnahmebereich für die Litze, so dass die Litze sich an den Wandbereichen und am Bodenbereich des kanalartigen Aufnahmebereichs kontaktieren kann und Schwingungen dämpfen kann. Die beiden Wandbereiche sind vorzugsweise im Wesentlichen parallel zueinander angeordnet. Weiter bevorzugt sind die beiden Wandbereiche derart umgebogen, dass sie zum Boden des kanalartigen Aufnahmebereichs in einem Winkel von kleiner als 90° angeordnet sind und leicht aufeinander zulaufen, so dass die Litze zwischen den Wandbereichen gehalten werden kann. Die Wandbereiche sind vorzugsweise aus dem Material des Federhebelelements selbst beispielsweise durch Stanzen und Umbiegen hergestellt.

Gemäß einer anderen bevorzugten Ausgestaltung der vorliegenden Erfindung ist die Litze einmal oder mehrmals um das Federhebelelement herumgewickelt. Dadurch kann eine Vielzahl von Kontaktstellen bzw. längeren Kontaktabschnitten zwischen Litze und Federelement bereitgestellt werden.

Gemäß einer noch anderen bevorzugten Ausgestaltung der vorliegenden Erfindung ist die Litze am Federhebelelement mittels Schweißen, Löten oder Kleben befestigt.

Weiterhin betrifft die vorliegende Erfindung eine elektrische Maschine mit einem erfindungsgemäßen Bürstenhalter. Die elektrische Maschine ist besonders bevorzugt als Elektromotor ausgebildet und wird als Antrieb für Komfortantriebe in Fahrzeugen, z.B. als Fensterheberantrieb, Sitzverstellantrieb, Schiebedachantrieb usw., verwendet.

### Zeichnung

Nachfolgend wird die Erfindung anhand von bevorzugten Ausführungsbeispielen in Verbindung mit der Zeichnung beschrieben. In der Zeichnung ist:
- Figur 1: eine schematische, perspektivische Ansicht eines Bürstenhalters gemäß einem ersten Ausführungsbeispiel der vorliegenden Erfindung,
- Figur 2: eine schematische, perspektivische Ansicht eines Büstenhalters gemäß einem zweiten Ausführungsbeispiel der vorliegenden Erfindung,
- Figur 3: eine schematische, perspektivische Ansicht eines Bürstenhalters gemäß einem dritten Ausführungsbeispiel der vorliegenden Erfindung und
- Figur 4: eine schematische, perspektivische Ansicht eines Bürstenhalters gemäß einem vierten Ausführungsbeispiel der vorliegenden Erfindung.

### Beschreibung der Ausführungsbeispiele

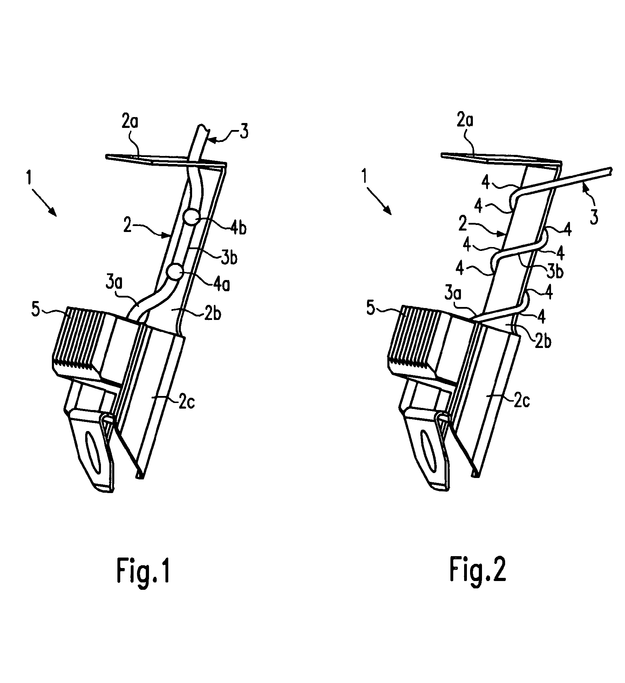

Nachfolgend wird unter Bezugnahme auf Figur 1 ein Bürstenhalters 1 gemäß einem ersten Ausführungsbeispiel der vorliegenden Erfindung beschrieben. Der Bürstenhalter 1 umfasst im Wesentlichen einen Federhebel 2, welcher beispielsweise aus einem Federstahl oder einem Kunststoff mit federnden Eigenschaften hergestellt ist. Der Federhebel 2 umfasst einen Befestigungsbereich 2a, mit welchem der Federhebel 2 beispielsweise am Gehäuse einer elektrischen Maschine befestigt ist. Der Befestigungsbereich 2a kann beispielsweise in einen Gehäusebereich eingeklipst oder durch Spritzgießen eingespritzt werden. Ferner umfasst der Federhebel 2 einen Hebelbereich 2b, welcher in einem vorbestimmten Winkel zum Befestigungsbereich 2a verläuft. Am Ende des Hebelbereichs 2b ist ein Haltebereich 2c zum Halten einer Bürste 5 angeordnet. Die Bürste 5 steht, wie in Figur 1 gezeigt, etwas vom Haltbereich 2c nach vorne vor und stellt eine elektrische Kontaktierung mit einem rotierenden Bauteil der elektrischen Maschine bereit.

Eine Stromzufuhr zur Bürste 5 wird über eine Litze 3 ermöglicht. Die Litze 3 umfasst eine Vielzahl von einzelnen Kupferdrähten, welche sich in einem gewissen Umfang relativ zueinander bewegen können. Die Kupferdrähte sind dabei als Drahtgeflecht ausgeführt. Wie in Figur 1 gezeigt, ist die Litze 3 an zwei Schweißpunkten 4a, 4b am Federhebel 2, genauer am Hebelbereich 2b, befestigt. Diese Schweißpunkte 4a, 4b stellen Kontaktstellen zwischen der Litze 3 und dem Federhebel 2 bereit. Somit ist ein Litzenbereich 3a zwischen der Bürste 5 und dem ersten Schweißpunkt 4a am Federhebel 2 gebildet. In diesem Litzenbereich 3a kann durch Reibung der einzelnen Drähte der Litze 3 zueinander eine Schwingungsenergie, welche aufgrund des Kontaktes der Bürsten im Betrieb erzeugt wird, gedämpft werden. Die Länge des Litzenbereichs 3a kann dabei abhängig von der Position des ersten Schweißpunktes 4a gewählt werden. Zwischen den beiden Schweißpunkten 4a, 4b ist ein weiterer Litzenbereich 3b angeordnet, welcher lose mit dem Hebelbereich 2b des Federhebels 2 in Kontakt ist. Mit anderen Worten ist der Litzenbereich 3b auf den Hebelbereich 2b aufgelegt. Auch in diesem Bereich können Schwingungen durch eine Reibung der einzelnen Drähte der Litze 3 zueinander und Reibung zwischen dem Litzenbereich 3b und dem Federhebel 2 gedämpft werden.

Somit sind erfindungsgemäß keine zusätzlichen Bauteile für eine Dämpfung von Schwingungen am Bürstenhalter notwendig, sondern die ohnehin vorhandene Litze 3 für die Stromzufuhr wird zusätzlich noch zur Dämpfung von Schwingungen verwendet. Dadurch kann der erfindungsgemäße Bürstenhalter besonders kostengünstig bereitgestellt werden. Neben dem Kostenvorteil ergibt sich auch ein Qualitätsvorteil, da der erfindungsgemäße Bürstenhalter besonders einfach aufgebaut ist und einfach hergestellt werden kann.

Nachfolgend wird ein Bürstenhalter 1 gemäß einem zweiten Ausführungsbeispiel unter Bezugnahme auf die Figur 2 beschrieben. Dabei sind gleiche bzw. funktional gleiche Teile mit den gleichen Bezugszeichen wie im vorherigen Ausführungsbeispiel bezeichnet.

Im Unterschied zum ersten Ausführungsbeispiel ist die Litze 3 beim zweiten Ausführungsbeispiel um den Hebelbereich 2b des Federhebels 2 mehrfach herumgewickelt. Dadurch ergeben sich insbesondere an den Biegestellen der Litze 3 mehrere Kontaktpunkte 4 zwischen der Litze 3 und dem Federhebel 2. Dadurch entsteht neben dem Litzenbereich 3a eine Vielzahl von weiteren Litzenbereichen jeweils zwischen zwei Kontaktpunkten 4, an denen die Litze 3 jeweils am Federhebel 2 aufliegt und diesen kontaktiert. Somit kann eine besonders große Länge der Litze 3 zur Dämpfung von am Federhebel 2 bzw. an der Bürste 5 auftretenden Schwingungen verwendet werden. Dadurch können die auftretenden Schwingungen besonders effektiv durch eine Reibung der einzelnen Drähte der Litze zueinander gedämpft werden.

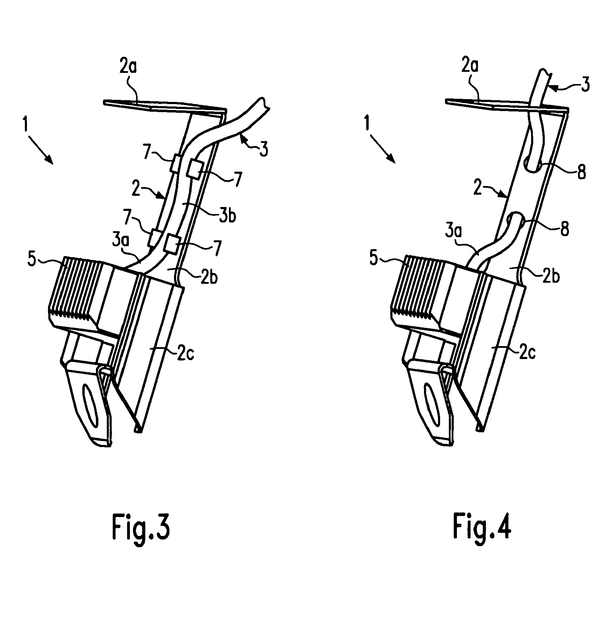

Figur 3 zeigt einen Bürstenhalter gemäß einem dritten Ausführungsbeispiel der vorliegenden Erfindung, wobei für gleiche bzw. funktional gleiche Teile wieder die gleichen Bezugszeichen wie in den vorhergehenden Ausführungsbeispielen verwendet wurden.

Wie in Figur 3 gezeigt, sind am Hebelbereich 2b des Federhebels 2 jeweils zwei einander gegenüberliegende Wandbereiche 7 gebildet. Die Wandbereiche 7 sind durch Stanzen und Umbiegen von Material aus dem Hebelbereich 2b gebildet. Die Wandbereiche 7 stehen im Wesentlichen senkrecht zur Basisfläche des Hebelbereichs 2b vor. Zwischen jeweils zwei einander gegenüberliegenden Wandbereichen 7 ist die Litze 3 hindurchgeführt. Die Wandbereiche 7 können dabei derart ausgebildet sein, dass sie die Litze 3 zwischen sich klemmen. Dadurch wird eine sichere Positionierung der Litze 3 am Federhebel 2 erreicht. Für eine sichere Befestigung können die Wandbereiche 7 zum Federhebel 2 in einem Winkel von kleiner als 90° angeordnet sein und etwas aufeinander zulaufend umgebogen sein, so dass sich ein Abstand zwischen zwei benachbarten Wandbereichen ausgehend von dem Hebelbereich 2b nach außen kontinuierlich verringert.

Eine Dämpfung von Schwingungen an der Bürste bzw. des Federhebels 2 wird hierbei durch den Litzenbereich 3a zwischen der ersten Kontaktstelle an den Wandbereichen 7 und der Bürste 5 erreicht und durch den Litzenbereich 3b zwischen den beiden Kontaktstellen an den Wandbereichen 7 am Federhebel 2. Ähnlich wie im ersten Ausführungsbeispiel sind somit beim zweiten Ausführungsbeispiel zwei Kontaktpunkte zwischen Litze 3 und Federhebel 2 realisiert. Ansonsten entspricht dieses Ausführungsbeispiel den vorhergehenden Ausführungsbeispielen, so dass auf die dort gegebene Beschreibung verwiesen werden kann.

Figur 4 zeigt einen Bürstenhalter 1 gemäß einem vierten Ausführungsbeispiel der vorliegenden Erfindung, wobei gleiche bzw. funktional gleiche Teile wieder mit den gleichen Bezugszeichen wie in den vorhergehenden Ausführungsbeispielen bezeichnet sind.

Im Unterschied zu den vorhergehenden Ausführungsbeispielen sind beim Bürstenhalter 1 gemäß dem vierten Ausführungsbeispiel zwei Durchgangsöffnungen 8 im Hebelbereich 2b des Federhebels 2 gebildet. Wie in Figur 4 gezeigt, ist die Litze 3 durch die beiden Öffnungen 8 hindurchgeführt. Somit entsteht eine Kontaktstelle zwischen der Litze 3 und dem Federhebel 2 im Bereich der Durchgangsöffnungen 8. Die Litze 3 wird ähnlich wie im ersten und dritten Ausführungsbeispiel zwischen den beiden Durchgangsöffnungen 8 wieder entlang des Federhebels 2 geführt, so dass neben dem Litzenbereich 3a auch der zwischen den beiden Durchgangsöffnungen 8 liegende Bereich der Litze zur Dämpfung von Schwingungen genutzt werden kann.

Ansonsten entspricht dieses Ausführungsbeispiel den vorhergehenden Ausführungsbeispielen, so dass auch auf die dort gegebene Beschreibung verwiesen werden kann.

Im Rahmen der Erfindung sind verschiedene Änderungen und Modifikationen möglich, ohne den Umfang der Erfindung wie in den beigefügten Ansprüchen definiert, zu verlassen.

## Patentansprüche

1. Bürstenhalter für eine elektrische Maschine, umfassend ein Federhebelelement (2), an welchem eine Bürstenhalteeinrichtung (2c) zum Halten einer Bürste (5) angeordnet ist und eine Litze (3) für eine elektrisch leitende Verbindung zur Bürste (5), **dadurch gekennzeichnet dass** die Litze (3) das Federhebelelement (2) an wenigstens einer Kontaktstelle (4a, 4b; 7; 8) derart kontaktiert, dass zwischen der Kontaktstelle und der Bürste (5) ein Litzenabschnitt (3a, 3b) mit einer vorbestimmten Länge gebildet ist, um am Bürstenhalter auftretende Schwingungen zu dämpfen.

2. Bürstenhalter nach Anspruch 1, **dadurch gekennzeichnet, dass** die Litze (3) eine Vielzahl von einzelnen, drahtartigen Elementen umfasst, welche relativ zueinander bewegbar sind.

3. Bürstenhalter nach einem der vorhergehenden Ansprüche, **dadurch gekennzeichnet, dass** die Litze (3) aus einem Drahtgeflecht hergestellt ist.

4. Bürstenhalter nach einem der vorhergehenden Ansprüche, **dadurch gekennzeichnet, dass** die Litze (3) an der Kontaktstelle (4a, 4b) mittels Schweißen oder Kleben am Federhebelelement (2) befestigt ist.

5. Bürstenhalter nach einem der Ansprüche 1 bis 4, **dadurch gekennzeichnet, dass** das Federhebelelement (2) wenigstens eine Durchgangsöffnung (8) aufweist und die Litze (3) durch die Durchgangsöffnung (8) hindurchgeführt ist.

6. Bürstenhalter nach Anspruch 5, **dadurch gekennzeichnet, dass** das Federhebelelement (2) zwei Durchgangsöffnungen (8) aufweist und die Litze (3) durch beide Durchgangsöffnungen (8) hindurchgeführt ist.

7. Bürstenhalter nach einem der Ansprüche 1 bis 4, **dadurch gekennzeichnet, dass** das Federhebelelement zwei Wandbereiche (7) aufweist, welche vom Federhebelelement (2) vorstehend und einander gegenüberliegend angeordnet sind, und die Litze (3) zwischen den beiden Wandbereichen (7) hindurchgeführt ist.

8. Bürstenhalter nach Anspruch 7, **dadurch gekennzeichnet, dass** die beiden Wandbereiche (7) im Wesentlichen parallel zueinander angeordnet sind.

9. Bürstenhalter nach Anspruch 7, **dadurch gekennzeichnet, dass** die beiden Wandbereiche ausgehend vom Federelement aufeinander zugehend angeordnet sind.

10. Bürstenhalter nach einem der Ansprüche 7 bis 9, **dadurch gekennzeichnet, dass** die Wandbereiche (7) aus umgebogenen Bereichen des Federhebelelements (2) gebildet sind.

11. Bürstenhalter nach einem der Ansprüche 1 bis 4, **dadurch gekennzeichnet, dass** die Litze (3) wenigstens einmal um das Federhebelelement (2) gewickelt ist.

12. Elektrische Maschine, umfassend einen Bürstenhalter nach einem der vorhergehenden Ansprüche.

## Claims

1. Brush holder for an electrical machine, comprising a spring lever element (2), on which a brush holding device (2c) for holding a brush (5) is arranged, and a stranded wire (3) for an electrically conducting connection to the brush (5), **characterized in that** the stranded wire (3) makes contact with the spring lever element (2) at at least one contact point (4a, 4b; 7; 8) in such a way that a stranded wire section (3a, 3b) with a predetermined length is formed between the contact point and the brush (5) in order to damp vibrations which occur on the brush holder.

2. Brush holder according to Claim 1, **characterized in that** the stranded wire (3) comprises a large number of individual, wire-like elements which can be moved relative to one another.

3. Brush holder according to either of the preceding claims, **characterized in that** the stranded wire (3) is produced from a wire mesh.

4. Brush holder according to one of the preceding claims, **characterized in that** the stranded wire (3) is fixed to the spring lever element (2) at the contact point (4a, 4b) by means of welding or adhesive bonding.

5. Brush holder according to one of Claims 1 to 4, **characterized in that** the spring lever element (2) has at least one passage opening (8) and the stranded wire (3) is routed through the passage opening (8).

6. Brush holder according to Claim 5, **characterized in that** the spring lever element (2) has two passage openings (8) and the stranded wire (3) is routed through the two passage openings (8).

7. Brush holder according to one of Claims 1 to 4, **characterized in that** the spring lever element has two wall regions (7) which are arranged such that they protrude from the spring lever element (2) and are situated opposite one another, and the stranded wire (3) is routed through between the two wall regions (7).

8. Brush holder according to Claim 7, **characterized in that** the two wall regions (7) are arranged substantially parallel to one another.

9. Brush holder according to Claim 7, **characterized in that** the two wall regions are arranged such that they approach one another, starting from the spring element.

10. Brush holder according to one of Claims 7 to 9, **characterized in that** the wall regions (7) are formed from bent-over regions of the spring lever element (2).

11. Brush holder according to one of Claims 1 to 4, **characterized in that** the stranded wire (3) is wound at least once around the spring lever element (2).

12. Electrical machine comprising a brush holder according to one of the preceding claims.

## Revendications

1. Porte-balai de machine électrique comprenant un élément de levier élastique (2) muni d'une installation porte-balai (2c) pour tenir un balai (5) ainsi qu'un cordon (3) pour réaliser la liaison électrique avec le balai (5),
**caractérisé en ce que**
le cordon (3) est en contact avec l'élément de levier élastique (2) en au moins un point de contact (4a, 4b ; 7 ; 8) de façon à former un segment de cordon (3a, 4b) de longueur prédéfinie entre le point de contact et le balai (5), pour amortir les vibrations engendrées dans le porte-balai.

2. Porte-balai selon la revendication 1,
**caractérisé en ce que**
le cordon (3) comprend un ensemble d'éléments filaires indépendants, mobiles les uns par rapport aux autres.

3. Porte-balai selon l'une des revendications précédentes,
**caractérisé en ce que**
le cordon (3) est fabriqué par un tressage de fils.

4. Porte-balai selon l'une des revendications précédentes,
**caractérisé en ce que**
le cordon (3) est fixé au point de contact (4a, 4b) par soudage ou collage à l'élément de levier élastique (2).

5. Porte-balai selon l'une des revendications 1 à 4,
**caractérisé en ce que**
l'élément de levier élastique (2) comporte au moins un orifice traversant (8) et le cordon (3) passe dans cet orifice traversant (8).

6. Porte-balai selon la revendication 5,
**caractérisé en ce que**
l'élément de levier élastique (2) comporte deux orifices traversants (8) et le cordon (3) passe dans les deux orifices traversants (8).

7. Porte-balai selon l'une des revendications 1 à 4,
**caractérisé en ce que**
l'élément de levier élastique comporte deux zones de paroi (7) en saillie face à face par rapport à l'élément de levier élastique (2) et le cordon (3) passe entre ces deux zones de paroi (7).

8. Porte-balai selon la revendication 7,
**caractérisé en ce que**
les deux zones de paroi (7) sont pratiquement parallèles l'une à l'autre.

9. Porte-balai selon la revendication 7,
**caractérisé en ce que**
les deux zones de paroi se rapprochent en partant de l'élément élastique.

10. Porte-balai selon l'une des revendications 7 à 9,
**caractérisé en ce que**
les zones de paroi (7) sont formées par des zones recourbées de l'élément de levier élastique (2).

11. Porte-balai selon l'une des revendications 1 à 4,
**caractérisé en ce que**
le cordon (3) est enroulé au moins une fois autour de l'élément de levier élastique (2).

12. Machine électrique comportant un porte-balai selon l'une des revendications précédentes.
